Europäisches Patentamt

(19) European Patent Office

Office européen des brevets

(11) Veröffentlichungsnummer: **0 117 419**
**B1**

(12) # EUROPÄISCHE PATENTSCHRIFT

(45) Veröffentlichungstag der Patentschrift:
10.06.87

(51) Int. Cl.⁴: **C 08 B 11/12, C 08 B 11/193**

(21) Anmeldenummer: **84100649.7**

(22) Anmeldetag: **23.01.84**

(54) Verfahren zur Herstellung von hochsubstituierten Carboxyalkylcellulosen und deren Mischethern.

(30) Priorität: **31.01.83 DE 3303153**

(43) Veröffentlichungstag der Anmeldung:
**05.09.84 Patentblatt 84/36**

(45) Bekanntmachung des Hinweises auf die Patenterteilung:
**10.06.87 Patentblatt 87/24**

(84) Benannte Vertragsstaaten:
**AT BE CH DE FR GB IT LI NL SE**

(56) Entgegenhaltungen:
**EP-A-0 074 631**
**EP-A-0 083 056**
**DE-A-1 908 417**
**US-A-3 723 413**

**ABSTRACT BULLETIN OF THE INSTITUTE OF PAPER CHEMISTRY, Band 38, Nr. 7, Januar 1968, Seiten 482-483, Artikel Nr. 5074 G. HUDRY-CLERGEON: "Preparation of carboxymethylcelluloses and properties of their aqueous solutions"**
**CHEMICAL ABSTRACTS, Band 71, Nr. 8, 20. Oktober 1969, Seite 123, Nr. 72109f, Columbus, Ohio, US M.H. KHUNDKAR u.a.: "Carboxymethyl cellulose. V. Carboxymethylation and properties of the products"**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Rähse, Wilfried, Dr., Kolhagenstrasse 44, D-4000 Düsseldorf 13 (DE)**
Erfinder: **Kühne, Norbert, Dürerstrasse 63, D-5657 Haan 1 (DE)**
Erfinder: **Wüst, Willi, Dr., Fasanenring 32, D-4030 Ratingen 6 (DE)**
Erfinder: **Engelskirchen, Konrad, Dr., Gonellastrasse 24, D-4005 Meerbusch (DE)**

**Beschreibung**

Die Erfindung betrifft ein vereinfachtes und wirtschaftliches Verfahren zur Herstellung von hochsubstituierten Carboxalkylcellulosen, insbesondere von Carboxymethylcellulosen, und deren Mischethern. Unter den Begriff der hochsubstituierten Carboxyalkylcellulosen fallen dabei alle diejenigen Produkte, deren durchschnittlicher Substitutionsgrad (DS) wenigstens 1,0 beträgt, vorzugsweise größer als 1,5 und insbesondere größer als 1,7 ist. Da die zu veretherende Anhydroglucoseeinheit 3 veretherbare OH-Gruppen besitzt, beträgt der maximale DS für Carboxyalkylgruppen 3, wobei allerdings dieser theoretische Grenzwert in einem wirtschaftlich tragbaren Verfahren kaum erreicht werden kann. Die Erfindung betrifft damit insbesondere die Herstellung von Carboxyalkylcellulosen und gewünschtenfalls deren Mischethern mit weiteren bekannten Veretherungsmitteln, die - bezüglich der Carboxyalkylsubstitution - DS-Werte im Bereich zwischen 1,0 und 2,8, insbesondere im Bereich von 1,5 bis 2,6 aufweisen.

Hochsubstituierte Carboxyalkylcellulosen der hier betroffenen Art sind in der Literatur nur vergleichsweise selten beschrieben worden. Substitutionsgrade mit Werten über 1,5 wurden nur durch vielfache Umsetzungen im Labormaßstab in Grundlagenforschungen eingestellt. Für einen Substitutionsgrad von maximal 2,6 benötigte M. Bouttemy (Bull. Soc. Chim. France 1960, 1750-4) pro mol Cellulose 75 bis 170 mol Monochloressigsäure, die in ca. 10 Veretherungsreaktionen nacheinander zugegeben wurden. Die Selektivitäten betrugen hierbei nur 3,5 bzw. 1,5 %.

In Chemical Abstracts 52 (1958), 15901 a wird die Herstellung von Carboxymethylcellulosen bzw. ihrem Natriumsalz mit DS-Werten von 1,5 bis 2,0 in einem Mehrstufenverfahren referiert, das gegenüber einem einstufigen Verfahren vorteilhaft sein soll. Es wird dabei gefordert, in den einzelnen Stufen mit jeweils einer sehr geringen Menge an Chloressigsäure zu arbeiten (etwa 0,8 mol/Glucoseeinheit) und das Rohprodukt jeder Verfahrensstufe zu isolieren und sorgfältig zu reinigen, bevor es der nächsten Veretherungsstufe zugeführt wird.

Alle diese bisher vorgeschlagenen Methoden zur Einstellung hoher Substitutiongrade sind im technischen Maßstab wirtschaftlich nicht durchführbar. Sie beschreiben Laborarbeiten der Grundlagenforschung, in denen Einsatzstoffmengen, Reaktionsbedingungen und Reaktionszeiten keine entscheidende Rolle spielen.

In der nicht vorveröffentlichten europäischen Patentanmeldung EP-A-0 074 631 mit den benannten Vertragsstaaten DE, FR, IT und SE wird ein Verfahren zur Herstellung des Alkalisalzes von Carboxymethylcelluloseethern beschrieben, bei dem Cellulose in einem wäßrigen organischen Suspensionsmedium in ein oder mehreren Stufen verethert wird, und bei dem ohne Aufarbeitung der Zwischenprodukte die Veretherung und Alkalisierung mehrfach durchgeführt werden kann. Kennzeichnend ist hier, daß das Molverhältnis von Alkalisierungsmittel zu Veretherungsmittel zwischen 0,1 und 0,99 liegen soll. Dabei wird unter der Menge an Alkalisierungsmittel nur der nicht zur Salzbildung mit dem Carboxyalkylierungsmittel eingesetzte Teil verstanden. Wenngleich die Entgegenhaltung ein mehrstufiges Verfahren beschreibt, bei dem keine Zwischenreinigung der Reaktionsprodukte durchgeführt wird und in den Beispielen ein Gesamtwassergehalt von nicht mehr als 450 Gew.-%, bezogen auf Celluloseeinsatzgewicht angegeben ist, so findet sich dennoch nicht der Hinweis, daß mit einer Menge von nicht mehr als 2,5 mol Carboxyalkylierungsmittel pro mol Anhydroglucoseeinheit und nicht mehr als 5 mol Alkylierungsmittel pro mol Anhydroglucoseeinheit besonders günstige Ergebnisse zu erzielen sind.

Die Erfindung geht demgegenüber von der Aufgabe aus, ein großtechnisch brauchbares, wirtschaftliches Verfahren zur Herstellung der geschilderten hochsubstituierten Carboxyalkylcellulosen und gewünschtenfalls ihrer Mischether mit anderen bekannten Veretherungsmitteln zu schaffen. Durch das erfindungsgemäße Verfahren sollen Carboxyalkylcellulosen und deren Mischether mit hohem Carboxyalkyl-DS und einem einstellbaren mittleren Gesamtsubstitutionsgrad (MS) der Ethergruppen zwar auch in einem Mehrstufenverfahren hergestellt werden können, dabei sollen aber die Rahmenbedingungen dieses Mehrstufenverfahrens so gewählt sein, daß insbesondere unter Berücksichtigung preislicher Überlegungen die danach gewonnenen Verfahrensprodukte eine wertvolle Marktbereicherung darstellen.

Gegenstand der Erfindung ist dementsprechend ein Verfahren zur Herstellung von hochsubstituierten Carboxyalkylcellulosen eines durchschnittlichen Substitutionsgrades (DS) zwischen 1,0 und 2,8 und gegebenenfalls ihren Mischethern eines mittleren Gesamtsubstitutionsgrades (MS) oberhalb von 1 (Carboxyalkylgruppen und andere Ethergruppen) in wiederholten Umsetzungsstufen, jeweils bestehend aus Alkalisieren der Suspension feinteiliger Cellulose in einem organischen Lösungsmittel und nachfolgender Veretherung mit dem Carboxyalkylierungsmittel, gewünschtenfalls unter gleichzeitiger vorheriger oder nachfolgender Umsetzung mit weiteren Veretherungmitteln, wobei das Verfahren dadurch gekennzeichnet ist, daß mit nicht mehr als 3 Umsetzungsstufen gearbeitet wird, dabei in jeder Stufe das Carboxyalkylierungsmittel in einer Menge von nicht mehr als 2,5 mol/mol Anhydroglucoseeinheit und das Alkalisierungsmittel in einer Menge von nicht mehr als 5 mol/mol Anhydroglucoseeinheit eingesetzt werden, daß weiterhin die jeweils nachfolgende Umsetzungsstufe im Reaktionsgemisch der abgeschlossenen Umsetzungsstufe ohne Zwischenreinigung des Verfahrensproduktes durchgeführt wird, und wobei weiterhin der Gesamtwassergehalt des Systems vor der letzten Veretherungsstufe nicht mehr als etwa 450 Gew.-% - bezogen auf Celluloseeinsatzgewicht - betragt. Bevorzugt liegt der Gesamtwassergehalt des Reaktionssystems vor der letzten Veretherungsstufe nicht über 350 Gew.-% und insbesondere zwischen etwa 80 und 250 Gew.-% - bezogen jeweils auf Celluloseeinsatzgewicht.

Das für eine wirtschaftliche großtechnische Verwertung geeignete erfindungsgemäße Verfahren sieht die Kombination einer Mehrzahl von kosten- und energiesparenden Verfahrensparametern vor:

Die mehrstufige Umsetzung wird auf höchstens 3 Umsetzungsstufen eingeschränkt. Tatsächlich sind 3 Umsetzungsstufen nur bei der Einstellung extrem hoher DS-Werte erforderlich, im allgemeinen können befriedigende Verfahrensergebnisse schon mit 2 Umsetzungsstufen erreicht werden. Die Menge des Carboxyalkylierungsmittels pro Verfahrensstufe wird ebenfalls derart zahlenmäßig beschränkt, daß Reaktandenverluste durch unerwünschte Nebenreaktionen auf ein vertretbares Ausmaß eingeschränkt werden. Entsprechend dieser zahlenmäßigen Beschränkung des Carboxyalkylierungsmittels ist eine entsprechende Beschränkung der Menge des Alkalisierungsmittels je Verfahrensstufe vorgesehen. Bewußt wird auf eine Zwischenreinigung des Verfahrensproduktes zwischen den einzelnen Verfahrensstufen verzichtet. Statt dessen wird vorgeschlagen, die nachfolgende - aus Akalisierung und anschließender Veretherung bestehende - Verfahrensstufe im Reaktionsgemisch der vorher liegenden abgeschlossenen Umsetzungsstufe vorzunehmen. Schließlich sieht insbesondere das erfindungsgemäße Verfahren die Steuerung des Reaktionsablaufes in die gewünschte Richtung durch Steuerung des Gesamtwassergehalts des Systems vor. Durch geeignete und im folgenden noch im einzelnen beschriebene Maßnahmen ist sichergestellt, daß über das gesamte Verfahren hinweg und selbst vor der letzten Veretherungsstufe der Wassergehalt des Reaktionssystems einen beschränkten oberen Grenzwert nicht überschreitet.

Alle diese Maßnahmen tragen zur wirtschaftlichen Verwirklichung der Herstellung hochsubstituierter Carboxyalkylcellulosen bei.

Zur weiteren Ausgestaltung des neuen Verfahrens in diese Richtung ist es im allgemeinen bevorzugt, die Alkalisieschränkter Kühlung des Reaktionsgemisches aus dem davorliegenden Verfahrensschritt durchzuführen. Üblicherweise wird bekanntlich die Alkalisierung der Cellulose bei vergleichsweise niedrigen Temperaturen und die anschließende Veretherung unter Temperaturerhöhung durchgeführt. Erfindungsgemäß wird in der Regel von dieser Temperaturführung bei der ersten Alkalisierungs- und Veretherungsstufe des Gesamtverfahrens Gebrauch gemacht. In den nachfolgenden Reaktionsstufen 2 und gegebenenfalls 3 kann jedoch in dieser Ausführungsform die Alkalisierung bei nur beschränkter Beeinflussung der Temperatur - insbesondere also nur beschränkter Kühlung des Reaktionsproduktes aus der ersten und gegebenénfalls zweiten Veretherungsstufe vorgenommen. Alkalisierung und Veretherung werden üblicherweise bei Temperaturen zwischen 10 und 110°C und vorzugsweise zwischen 30 und 85°C durchgeführt, wobei allerdings die Alkalisierung des ersten Verfahrensschrittes bevorzugt auch bei Temperaturen unterhalb 30°C durchgeführt wird.

Ein wesentliches Element des erfindungsgemäßen Verfahrens liegt darin, daß ein bestimmtes Einsatzmolverhältnis an Carboxyalkylierungsmittel pro Anhydroglucoseeinheit je Verfahrensstufe nicht überschritten wird. Die Obergrenze dieses Einsatzmolverhältnisses je Verfahrensstufe liegt bei etwa 2.5 mol des Carboxyalkylierungsmittels pro mol Anhydroglucoseeinheit. Vorzugsweise werden geringere Mengen an Carboxyalkylierungsmittel eingesetzt, die üblicherweise die Grenze von etwa 2.2 mol/mol Anhydroglucoseeinheit nicht überschreiten. Bevorzugt wird pro Veretherungsstufe mit 1.0 - 2.2 mol Carboxyalkylierungsmittel je mol Anhydroglucoseeinheit gearbeitet. Größere Mengen an Veretherungsmittel gehen lediglich in unerwünschte Nebenreaktionen und behindern damit das Ziel der Erfindung.

Entsprechend der Einschränkung der je Verfahrensstufe eingesetzten Menge des Carboxyalkylierungsmittels wird auch das je Umsetzungsstufe eingesetzte Alkalisierungsmittel in seiner Menge beschränkt. Üblicherweise liegt die Obergrenze für die Menge des Alkalisierungsmittels je Verfahrensstufe bei 4.5 mol je mol Anhydroglucoseeinheit, wobei das Alkalisierungsmittel bevorzugt in Mengen von etwa 2 - 4 mol je mol Anhydroglucoseeinheit und je Verfahrensstufe zur Verwendung kommt.

Die erwünschte Steuerung der erfindungsgemäßen Reaktion auf hohe Substitutionsgrade wird insbesondere über die Gesamtwassermenge im System ermöglicht. Wichtig ist dabei, das Reaktionssystem über alle Verfahrensstufen hinweg hinreichend wasserarm zu halten. Völlig ohne Wasserzusatz können allerdings keine klarlöslichen Produkte erhalten werden. Je niedriger der gewünschte Substitutionsgrad liegen soll, desto höher kann der Wassergehalt auf der Cellulose eingestellt werden. Umgekehrt gilt, daß der Gesamtwassergehalt des Systemes um so niedriger sein soll, je höher der angestrebte Substitutionsgrad der Carboxyalkylcellulose gewählt wird.

Die Wassermenge im System und damit der Substitutionsgrad kann in verschiedenster Weise beeinflußt werden:

Wichtig ist einerseits die Wassermenge, die durch die Reaktanden bzw. die Reaktionshilfsmittel in das System eingebracht wird. Zu berücksichtigen ist weiterhin die Wassermenge, die während der Reaktion gebildet wird, worauf - bei der zulässigen Wassermenge, die über die Reaktanden bzw. Reaktionshilfsmittel eingebracht wird - zu achten ist. Schließlich ist es erfindungsgemäß möglich, unerwünscht hohe Wassermengen intermediär aus dem Reaktionsgemisch, insbesondere durch eine azeotrope Destillation mit den eingesetzten Suspensionsflüssigkeiten, auszukreisen und damit den Wassergehalt des Systems zu senken.

Tatsächlich kann über den jeweiligen Wassergehalt auch Einfluß auf die erforderliche Stufigkeit des erfindungsgemäßen Verfahrens genommen werden. Während beispielsweise der Bereich mittelhoher Substitutionsgrade von DS = 1.0 - 1.5 durch Einsatz von wasserfreien bzw. wasserarmen Reaktanden und Reaktionshilfsmitteln in einer Verfahrensstufe eingestellt werden kann, ist es andererseits möglich, gleiche Substitutionsgrade bei Zulassen beschränkter Wassermengen im Reaktionsgemisch - jetzt aber in 2-stufiger Verfahrensführung - zu erreichen. Für das erfindungsgemäße Ziel der wirtschaftlichen Herstellung der geschilderten Carboxyalkylcelluloseprodukte kann dabei die zweistufige Verfahrensweise letztlich

3

kostensparender und einfacher sein als das Arbeiten unter extrem wasserarmen Bedingungen. Dies ist stets dann der Fall, wenn die für die einstufige, extrem wasserarme Arbeitsweise erforderlichen Maßnahmen kostenaufwendiger oder unbequemer sind als die 2-stufige Arbeitsweise unter Zulassen beschränkter Wassermengen in jeder Verfahrensstufe. So kann es insbesondere wünschenswert und verfahrensförderlich sein, zur erleichterten Alkalisierung beispielsweise wäßrige Natronlauge einzusetzen und als flüssiges Suspendiermittel ein wasserhaltiges Alkohol-Azeotrop in Kreislauf zu führen.

Für extrem hohe Carboxyalkylsubstitutionsgrade (DS) >1,5 ist allerdings die doppelte oder sogar dreifache Umsetzung unter strenger Begrenzung des Gesamtwassergehalts in jeder Verfahrensstufe erforderlich. Erfindungsgemäß wird hier das Celluloseausgangsmaterial in reinem Lösungsmittel (100 %ig) suspendiert, mit konzentrierter Alkalilauge - insbesondere 50 bis 100 %iger Natronlauge, wobei 0 bis 50 % Wasser und/oder Methanol sein können, - alkalisiert und mit wasserfreiem Carboxyalkylierungsmittel verethert. Das feste Carboxyalkylierungsmittel kann dabei in dem wasserfreien oder praktisch wasserfreien Lösungsmittel gelöst sein. Durch Kontrolle des gesamten Wassergehalts im System durch die einzelnen Verfahrensstufen sowie durch Einschränkung des Einsatz-Molverhältnisses im erfindungsgemäßen Rahmen ist die Herstellung von Carboxyalkylcellulosen mit hohen Substitutionsgraden, insbesondere im Bereich von etwa 1,1 bis etwa 2,6 in doppelter bis maximal dreifacher Umsetzung möglich. Die Selektivitäten liegen hierbei in praktisch allen Fällen zwischen 40 und 80 %, d. h. in wirtschaftlich günstigen Bereichen.

Erfindungsgemäß kann es bevorzugt sein, daß der Gesamtwassergehalt des Reaktionssystems vor der letzten Veretherungsstufe nicht höher als etwa 400 Gew.-% und insbesondere zwischen 80 und 200 Gew.-% liegt - jeweils bezogen auf das Celluloseeinsatzgewicht.

Eine weitere Steuerungsmöglichkeit des erfindungsgemäßen Verfahrens in Richtung des angestrebten Zieles liegt in der Abstimmung der in den jeweiligen Stufen des Gesamtverfahrens eingesetzten Mengen an Veretherungsmittel - und an Alkalisierungsmittel - aufeinander. Bevorzugt ist die Menge des Veretherungsmittels in einer nachfolgenden Umsetzungsstufe der entsprechenden Menge an Veretherungsmittel aus der vorhergehenden Umsetzungsstufe höchstens gleich. Besonders bevorzugt ist allerdings, daß in der nachfolgenden Umsetzungsstufe weniger an Veretherungsmittel eingesetzt wird als in der unmittelbar vorausgegangenen Umsetzungsstufe. Dementsprechend ist es weiterhin bevorzugt, daß auch die Menge des Alkalisierungsmittels in jeder nachfolgenden Umsetzungsstufe höchstens gleich groß ist wie die in der vorherliegenden Stufe eingesetzte Menge an Alkalisierungsmittel, insbesondere aber in der nachfolgenden Umsetzungsstufe ebenfalls geringer ist als die Menge an Alkalisierungsmittel, die in der vorangegangenen Stufe eingesetzt worden ist.

Das bevorzugte Carboxyalkylierungsmittel ist die Monochloressigsäure, die als solche aber auch als ihr Natriumsalz eingesetzt werden kann. Ihre Verwendung in der Form des Natriumsalzes führt zu weiterer Einschränkung des Gesamtwassergehalts im Reaktionssystem und kann dementsprechend wünschenswert sein. Bei Verwendung des Carboxyalkylierungsmittels in Salzform verringert sich der in der Alkalisierungsstufe erforderliche Alkalibetrag in bekannter Weise um diesen sonst zur in-situ-Salzbildung verbrauchten Anteil. Das bevorzugte Alkalisierungsmittel ist Natriumhydroxid.

Die bevorzugten flüssigen Suspendiermittel sind niedere aliphatische Alkohole, insbesondere solche mit bis zu 6 C-Atomen, bevorzugt Alkohole der genannten Art mit 2 bis 5 C-Atomen. Geeignet sind damit insbesondere Ethanol, n-Propanol, vor allem aber Isopropanol und n-Butanol. Geeignet sind weiterhin Isobutanol, tert.-Butanol, n-Amylalkohol, aber auch weitere organische Suspendierflüssigkeiten, beispielsweise Aceton, sowie Mischungen aus den genannten Komponenten. Auch andere literaturbekannte Suspendierhilfsmittel einschließlich der bekannten 2-Phasen-Gemische sind untersucht worden. Praktisch sind alle Lösungsmittel und Lösungsmittelgemische zumindest bereichsweise für das erfindungsgemäße Verfahren geeignet, wobei allerdings Einfluß auf die Selektivität des Verfahrens genommen wird und jeweils eine Abstimmung des Gesamtwassergehalt des Systems auf das gewählte Reaktionssystem zweckmäßig ist. Die als Suspensionsflüssigkeiten eingesetzten organischen Lösungsmittel werden zweckmäßigerweise in Gewichtsverhältnissen von 3 bis 25 Teilen des Lösungsmittels je 1 Gewichtsteil Cellulose verwendet. Bevorzugt liegt die Menge des Lösungsmittels im Bereich von 8 bis 16 Gewichtsteilen Lösungsmittel je 1 Gewichtsteil Cellulose.

Zur Einschränkung des Wassergehalts im Reaktionssystem wird Natronlauge bevorzugt in Konzentrationen von wenigstens 50 Gew.-%, beispielsweise in Konzentrationen von 50 bis 70 Gew.-% eingesetzt. Chloressigsäure bzw. ihr Natriumsalz kann wasserfrei oder wasserarm gelöst in praktisch wasserfreiem oder wasserarmem Lösungsmittel zur Verwendung kommen. Dabei kann es wünschenswert sein, zur Begrenzung eines Ansteigens des Wassergehalts im Reaktionssystem in nachfolgenden Reaktionsstufen konzentriertere bzw. wasserärmere Reaktanden in die Alkalisierung und/oder Veretherung einzuführen als in vorherliegenden Verfahrensstufen. Ist beispielsweise die erste Alkalisierung mit 50 %iger Lauge durchgeführt worden, so kann die zweite Alkalisierung mit 70 bis 100 %iger Lauge durchgeführt werden, um die gewünschte Einschränkung des Gesamtwassergehalts im System einzuhalten.

Nach einer weiteren Ausführungsform der Erfindung wird zur Einschränkung des Wassergehaltes im Reaktionsansatz die wäßrige Natronlauge ganz oder teilweise durch alkoholische Natronlauge ersetzt. Natriumhydroxid löst sich in Methanol besser als in dessen höheren Homologen. Methanolische Natronlauge ist daher bevorzugt; insbesondere die Lösungen von Natriumhydroxid-monohydrat in Methanol sind geeignet und können mit Erfolg für die erste und/oder die zweite Alkalisierung verwendet werden, wobei die bei wäßrigen Laugen angeführten Konzentrationsbereiche auch hier Gültigkeit haben.

**0 117 419**

Als Celluloseeinsatzmaterial können alle handelsüblichen Cellulosesorten verwendet werden. Geeignet sind beispielsweise Buchen- und Fichtencellulosen sowie Linters. Die charakteristische Faserlänge der Cellulose sollte nach der Mahlung 2,0 mm nicht überschreiten. Vorzugsweise werden Cellulosen mit Faserlängen von 0,5 mm bis 1,2 mm eingesezt. Die Faserlänge kann natürlich auch darunter liegen. Selbstverständlich kann jede Pulvercellulose erfolgreich eingesetzt werden. Die vorgesehene Faserlänge wird durch wirtschaftliche Überlegungen bestimmt, eine Mindestfaserlänge bzw. eine bestimmte Mindestpulverfeinheit existiert nicht. Für hochsubstituierte Produkte und teilweise auch für den Bereich mittelhoher Substitutionsgrade sollte wegen möglicher Probleme bei der Reinigung auf den Einsatz niedermolekularer-Cellulosen, beispielsweise bestimmter Buchencellulosen, verzichtet werden.

Erst nach Abschluß der letzten Verfahrensstufe werden erfindungsgemäß die Verfahrensprodukte gereinigt. Dabei ist zu beachten, daß insbesondere bei den hochsubstituierten Carboxyalkylcellulosen mit DS-Werten > 1,5 sowie bei entsprechenden, im folgenden noch zu schildernden Mischethern wegen der hohen Löslichkeit dieser Produkte nur noch wenige Lösungsmittel-Wasser-Gemische in Betracht kommen. Bevorzugt wird erfindungsgemäß die Reinigung bzw. Wäsche der Verfahrensprodukte mit Ethanol/Wasser-Mischungen durchgeführt, wobei Wassergehalte von 10 bis 45 % eingestellt werden können. Geeignet sind aber auch wäßrige Mischungen von Isopropanol, n-Propanol und Aceton bzw. Gemischen dieser Lösungsmittel. Je höher der Substitutionsgrad eingestellt wird, desto deutlicher zeigt sich die Überlegenheit der Wäsche mit Ethanol/Wasser.

Nach dem erfindungsgemäßen Verfahren können Produkte mit Viskositäten zwischen etwa 5 bis ca. 70 000 mPas, gemessen mit dem Brookfield-Viskosimeter bei 20°C in 2 Gew.-%iger Lösung, hergestellt werden. Die Viskosität kann durch Wahl der Einsatzcellulose bzw. durch eine Mischung verschiedener Polymerer Cellulosen oder auf bekannte Weise durch oxidativen Abbau eingestellt werden. Es ist allerdings zu beachten, daß mit steigendem Substitutiongrad das Molekulargewicht einer Anhydroglucoseeinheit immer mehr ansteigt und damit verbunden die maximal erreichbare Viskosität abnimmt. Eine Carboxymethylcellulose mit einem DS von etwa 1,5 weist beispielsweise nur noch eine maximale Viskosität von etwa 25 000 mPas ohne Zusatz von Vernetzungsmitteln auf.

Die Reaktionsbedingungen von Alkalisierung und Veretherung im einzelnen entsprechen den Angaben des Standes der Technik. Verwiesen wird hier beispielsweise auf die US-PS 3 085 087 und die DE-OS 14 18 238.

In den Rahmen der Erfindung fällt die Herstellung von Carboxyalkylgruppen enthaltenden Mischethern durch zusätzliche Umsetzung mit anderen bekannten Alkylierungsmitteln. Diese anderen Alkylierungsmittel können dabei vor der Carboxyalkylierung, gleichzeitig damit oder auch nachträglich mit der Cellulose bzw. der Carboxyalkylcellulose zur Reaktion gebracht werden. Geeignete übliche weitere Veretherungsmittel sind beispielsweise Alkylhalogenide mit 1 bis 20 Kohlenstoffatomen, Epoxyalkane, insbesondere 1,2-Epoxyalkane mit 2 bis 18 Kohlenstoffatomen und/oder Glycid. Bevorzugte Veretherungmittel sind neben der Chloressigsäure und/oder Chlorpropionsäure bzw. ihren Alkalisalzen Methylchlorid, Ethylchlorid, n- und Isopropylchlorid, Butylchloride, Ethylenoxid, Propylenoxid und/oder Glycid. Auch hier gilt, daß die Reaktionsbedigungen, d.h. insbesondere Reaktoonsdrucke und -temperaturen, den im einschlägigen Stand der Technik beschriebenen Angaben entsprechen, vergleiche hierzu die bereits genannte Literatur.

Besonders interessant und verhältnismäßig einfach herzustellen sind Hydroxyethylcarboxymethylcellulosen (HECMC). Die HECMC unterscheiden sich in der chemischen Strukturformel und auch in ihrem Verhalten in Abhängigkeit von der jeweils gewählten Herstellungsart. Man kann die Monochloressigsäure bzw. das entsprechende Salz sowie den zweiten Reaktionspartner, das Ethylenoxid, gleichzeitig oder getrennt zeitlich davor oder danach zugegeben.

Die erfindungsgemäß bevorzugten Mischether weisen einen mittleren Substitionsgrad (MS) - insbesondere einen Hydroxyethyl-Substitutionsgrad MS (HE) - von 0,001 bis 4 sowie einen Carboxymethyl-Substitutionsgrad MS (CM) von 1,0 bis ca. 2,6 auf. Vorzugsweise liegt der DS (CM) bei 1,0 bis 1,75 und der MS der anderen Ethergruppen, insbesondere der MS (HE) bei 0,01 bis 2,0, insbesondere bei 0,05 bis 1,5 bzw. bei 0,01 bis 1.

Die Reaktion erfolgt vorzugsweise in gerührten Reaktoren, beispielsweise in Mischern, in Rührkesseln, Kaskaden oder auch in Kolonnen, bzw. in Schneckenapparaten. In gerührten Systemen sollten mehrstufige Rührorgane mit Durchmesserverhältnissen von über 0,5 des Behälterdurchmessers eingesetzt werden. In den genannten Reaktoren kann die Reaktion sowohl kontinuierlich als auch diskontinuierlich durchgeführt werden.

In Ergänzung und Erweiterung der bisherigen Offenbarung zum erfindungsgemäßen Verfahren gelten zusätzlich die folgenden Angaben:

Es ist insbesondere wirtschaftlich vorteilhaft, schon den Bereich der Substitutionsgrade (DS-CM) von etwa 1,0 bis 1,5 in mehrfacher Umsetzung, insbesondere in doppelter Umsetzung, einzustellen. Hierzu kann mit 75 bis 100 Gew.-%igem Lösungsmittel, vorzugsweise mit 85 bis 97 Gew.-%igem Lösungsmittel, gearbeitet werden, wobei der Wassergehalt im System vor jeder Veretherungsstufe und insbesondere auch vor der letzten Veretherungstufe im Bereich von 0,7 bis 4,5 kg/kg Cellulose liegt und das Einsatzmolverhältnis von Veretherungmittel zu Cellulose je Umsetzungsstufe Werte nicht über 3,0, insbesondere Werte zwischen 0,6 und 2,5 - vorzugsweise Werte von 0,8 bis 2,0 - annimmt.

Für höhere Substitutionsgrade des Carboxyalkylsubstituenten (DS > 1,5 und insbesondere im Bereich von 1,5 bis 2,3) wird erfindungsgemäß wenigstens in doppelter Umsetzung gearbeitet. Geeignet sind hier insbesondere 90 bis 100 Gew.-%ige Lösungsmittel, bevorzugt ist das Arbeiten mit 98 bis 100 Gew.-%igem Lösungsmittel. Der Wassergehalt im System überschreitet vor den jeweiligen Veretherungsstufen den Bereich von 0,5 bis 3,5 kg/kg Cellulose nicht, die Einsatzmolverhältnisse des Veretherungsmittels zur Cellulose liegen

**0 117 419**

pro Umsetzungsstufe bei Werten nicht über 3,0 und insbesondere bei Werten zwischen 0,6 und 2,5, vorzugsweise zwischen 0,8 und 2,0 Mol Veretherungsmittel/Mol Anhydroglucoseeinheit. Für extrem hohe Substitutionsgrade des genannten Bereichs, insbesondere also für DS-Werte des Carboxyalkylsubstituenten zwischen etwa 1,8 und 2,6, vorzugsweise von 2,0 bis 2,5, wird im allgemeinen in 3-facher Umsetzung gearbeitet. Als Lösungsmittel kann dabei 90 bis 100 Gew.-%iges Lösungsmittel, vorzugsweise 98 bis 100 Gew.-%iges Lösungsmittel, eingesetzt werden, wobei der Wassergehalt im System vor jeder Veretherungsstufe im Bereich von 0,5 bis 4,0-kg/kg Cellulose liegen kann. Die Einsatzmolverhältnisse des Veretherungsmittel zur Cellulose pro Umsetzung überschreiten Werte von 3,0 nicht und liegen bevorzugt im Bereich von 0,7 bis 2,5, insbesondere im Bereich von 0,9 bis 2,0 mol des Carboxyalkylierungsmittels pro mol Anhydroglucoseeinheit.

Die nach dem erfindungsgemäßen Verfahren hergestellten hochsubstituierten Cellulosederivate eignen sich aufgrund ihrer besonderen Eigenschaften auf vielen Gebieten, in denen insbesondere hohe Hydrophilie und hohe Wasserlöslichkeit der Cellulosederivate bei gleichzeitig glatter Struktur der wäßrigen Aufbereitungen gefordert werden. Ein besonderes Einsatzgebiet für die erfindungsgemäß hergestellten Cellulosederivate mit hohem Carboxyalkylsubstitutionsgrad und deren Mischether ist ihre Verwendung als Hilfsstoff bei der Erdölbohrung, insbesondere die Verwendung als "Thickener" bzw. als "Fluid loss reducer" gemäß den OCMA-Spezifikationen, vergl. hierzu Schriften der "Oil Companies Materials Association", Cecil Chambers, 86 Strand, London WC2.

Die Verwendung der erfindungsgemäß hergestellten Verfahrensprodukte auf dem Gebiet der Hilfsstoffe bei der Erdölförderung, insbesondere bei der Erdölbohrung ist ein weiterer Aspekt der hier geschilderten Erfindung.

Die folgenden Beispiele beschreiben die Herstellung klarlöslicher hochsubstituierter Carboxyalkylcellulosen und deren Mischether.

**Beispiele**

Die Viskosität, die in allen nachfolgenden Beispielen angegeben ist, wurde in 2 Gew.-%iger wäßriger Lösung unter Annahme von 5 % Feuchtigkeit des Celluloseethers bei 20°C nach Brookfield ermittelt. Die Trübungszahl ist in einem Meßgerät der Fa. Lange, Berlin, in Küvetten mit 3,5 cm Schichtdicke gemessen worden.

Fichtencellulose, vorliegend als Pulver mit der Korngrößenverteilung 95 % < 100 µ bzw. als Faser mit 0,5 mm und 1,1 mm "Faserlänge" sowie mit einer Feuchte von ca. 4 % Wasser, wurde unter kräftigem Rühren in einem Lösungsmittel bei Raumtemperatur suspendiert. Innerhalb von ca. 5 Minuten ist die meist 50 %ige Natronlauge zugetropft worden. Unter Kühlung wurde anschließend die Monochloressigsäure zugegeben. Nach langsamem Aufheizen auf 50°C ist die Umsetzung jeweils 20 Minuten lang bei 50°C und 60°C sowie 80 Minuten bei 70°C durchgeführt worden. Nach Abkühlen auf ca. 30°C fand entweder die nächste Umsetzung oder die Aufbereitung nach Abneutralisieren des sehr geringen Laugenüberschusses statt. Die Wäsche erfolgte je nach Substitutionsgrad des Produktes mit 55 bis 80 %igem Isopropanol (IPA) bzw. mit Ethanol. Nach Trocknung des Produktes im Vakuum ließen sich je nach den Einsatzmengen die folgenden Produkte synthetisieren:

1. Einsatz: 70 g Cellulose, jeweils 86,5 g 50 %ige Natronlauge für die 1. und 2. Umsetzung, jeweils 102 g 50 %ige wasserfreie Monochloressigsäure für die 1. und 2. Umsetzung, 1,1 g Methylchlorid, 0,91 g Ethylenoxid; Lösungsmittel: 841 g IPA, 111 g Wasser.
Produkt: Substitutionsgrade DS (CM) = 1,51, DS (ME = Methyl) = 0,03, MS (HE) = 0,02, Viskosität 3.100 mPas, Trübungszahl 2.

2. Einsatz: 70 g Cellulose, 83,3 g für die 1. und 62,8 g 50 %ige Natronlauge für die 2. Umsetzung, 64 g für die 1. und 44,1 g 80 %ige Monochloressigsäure für die 2. Umsetzung, 1,8 g Methylchlorid; Lösungmittel: n-Butanol (100 %).
Produkt: Substitutionsgrade DS (CM) = 1,45, DS (ME) = 0,05, Viskosität 1.400 mPas, Trübungszahl 4.

3. Einsatz: 70 g Cellulose, für die 1. und 2. Umsetzung jeweils 132 g 50 %ige Natronlauge und 156 g 50 %ige wasserfreie Monochloressigsäure; Lösungsmittel: 890 g IPA, 47 g Wasser.
Produkt: Substitutionsgrad 1,65, Selektivität 41 %, Viskosität 150 mPas, Trübungszahl 1.

4. Einsatz: Wie Beispiel 3; Lösungsmittel: 972 g IPA (100 %).
Produkt: Substitutionsgrad 2,04; Selektivität 51 %, Viskosität 230 mPas, Trübungszahl 1,5.

5. Einsatz: Wie Beispiel 3; Lösungsmittel: n-Butanol (100 %)
Produkt: Substitutionsgrad 2,20, Selektivität 55 %, Viskosität 1.700 mPas, Trübungszahl 5.

6. Einsatz: 70 g Cellulose

| | | |
|---|---|---|
| 1. Umsetzung: | 132 g | 50 % Natronlauge, |
| 2. Umsetzung: | 95 g | 70 % Natronlauge, |
| 3. Umsetzung: | 66 g | 100 % Ätznatron |

sowie jeweils 156 g 50 %ige wasserfreie Monochloressigsäure; Lösungsmittel: 970 g n-Butanol (100 %).
Produkt: Substitutionsgrad 2,35, Selektivität 39 %, Viskosität 170 mPas, Trübungszahl < 1.

7. Einsatz: 60 kg Cellulose, 87 kg bzw. 61 kg 50 %ige Natronlauge für die 1. und 2. Umsetzung sowie 54,6 kg bzw. 37,8 kg 80 %ige Monochloressigsäure; Lösungsmittel: 900 kg 87 %iges IPA (Isopropanol).
Produkt: Substitutionsgrad 1,48, Selektivität 67 %, Viskosität 4.100 mPas, Trübungszahl 5,5, Quellkörper <

0,5 %.

8. <u>Einsatz</u>: 70 kg Cellulose, 134 kg 50 %ige Natronlauge für die 1. und 67 kg Ätznatron für die 2. Umsetzung, jeweils 78,4 kg Monochloressigsäure in wasserfreier 50 %iger Lösung; Lösungsmittel: 1.018 kg IPA (100 %).

<u>Produkt</u>: Substitutionsgrad 1,99, Selektivität 50 %, Viskosität 1.300 mPas, Trübungszahl 9, Quellkörper < 0,5 %.

**Patentansprüche**

für die Vertragsstaaten AT, BE, CH, GB, LI, NL.

1. Verfahren zur Herstellung von hochsubstituierten Carboxyalkylcellulosen eines durchschnittlichen Substitutionsgrades (DS) zwischen 1,0 und 2,8 und gegebenenfalls ihren Mischethern eines mittleren Gesamtsubstitutionsgrades (MS) > 1 in wiederholten Umsetzungsstufen, jeweils bestehend aus Alkalisieren der Suspension feinteiliger Cellulose in einem organischen Lösungsmittel und nachfolgender Veretherung mit dem Carboxyalkylierungsmittel, gewünschtenfalls unter gleichzeitiger, vorheriger oder nachfolgender Umsetzung mit weiteren Veretherungsmitteln, dadurch gekennzeichnet, daß mit nicht mehr als 3 Umsetzungsstufen gearbeitet wird, dabei in jeder Stufe das Carboxyalkylierungsmittel in einer Menge nicht mehr als 2,5 mol/mol Anhydroglucoseeinheit und das Alkalisierungsmittel in einer Menge nicht mehr als 5 mol/mol Anhydroglucoseeinheit eingesetzt werden, daß weiterhin die jeweils nachfolgende Umsetzungsstufe im Reaktionsgemisch der abgeschlossenen Umsetzungsstufe ohne Zwischenreinigung durchgeführt wird und daß der Gesamtwassergehalt des Systems vor der letzten Veretherungsstufe nicht mehr als 450 Gew.-% - bezogen auf Celluloseeinsatzgewicht - beträgt.

2. Verfahren nach Anspruch 1, dadurch gekennzeichnet, daß die Alkalisierung einer nachfolgenden Umsetzungsstufe nach lediglich begrenzter Kühlung des Reaktionsgemisches aus dem davorliegenden Veretherungsschritt durchgeführt wird, wobei zur nachfolgenden Alkalisierung Temperaturen nicht unterhalb 30 - 40°C eingestellt werden.

3. Verfahren nach Ansprüchen 1 und 2, dadurch gekennzeichnet, daß die Menge des in jeder Umsetzungsstufe eingesetzten Carboxyalkylierungsmittels
im Bereich von 1,0 bis 2,2 mol/mol Anhydroglucoseeinheit liegt, während das Alkalisierungsmittel
in Mengen nicht über 4,5 mol, insbesondere in Mengen von 2 bis 4 mol/mol Anhydroglucoseeinheit eingesetzt wird.

4. Verfahren nach Ansprüchen 1 bis 3, dadurch gekennzeichnet, daß die Menge des Veretherungsmittels in eine nachfolgenden Umsetzungsstufe und vorzugsweise auch die entsprechende Menge des Alkalisierungsmittels höchstens der jeweils entsprechenden Menge aus der vorhergehenden Umsetzungsstufe gleich ist, vorzugsweise aber geringer als diese ist.

5. Verfahren nach Ansprüchen 1 bis 4, dadurch gekennzeichnet, daß der Gesamtwassergehalt des Reaktionssystems vor der letzten Veretherungsstufe nicht mehr als 400 Gew.-%, insbesondere nicht mehr als 350 Gew.-% ausmacht und vorzugsweise zwischen etwa 80 und 250 Gew.-% - jeweils bezogen auf das Celluloseeinsatzgewicht - liegt.

6. Verfahren nach Ansprüchen 2 bis 5, dadurch gekennzeichnet, daß als organische Lösungsmittel aliphatische Alkohole mit 2 bis 5 C-Atomen und insbesondere Isopropylalkohol und/oder n-Butanol eingesetzt werden.

7. Verfahren nach Ansprüchen 1 bis 6, dadurch gekennzeichnet, daß bei Temperaturen von 10 bis 110°C, vorzugsweise bei Temperaturen von 40 bis 85°C gearbeitet wird, wobei jedoch die Alkalisierung der ersten Verfahrensstufe bevorzugt auch unterhalb 40°C durchgeführt wird.

8. Verfahren nach Ansprüchen 1 bis 7, dadurch gekennzeichnet, daß DS-Carboxyalkalierungswerte von 1,4 und höher, vorzugsweise von 1,7 und höher, insbesondere des Bereichs von 1,5 bis 2,6 eingestellt werden.

9. Verfahren nach Ansprüchen 1 bis 8, dadurch gekennzeichnet, daß das organische Lösungsmittel und das Carboxyalkylierungsmittel wenigstens weitgehend wasserfrei und das Alkalisierungsmittel mit einem Wassergehalt nicht über 50 Gew.-% eingesetzt werden, wobei das Wasser ganz oder teilweise durch Methanol ersetzt werden kann.

10. Verfahren nach Anspruch 9, dadurch gekennzeichnet, daß das Alkalisierungsmittel gelöst in Wasser und/oder Alkohol, insbesondere Methanol eingesetzt werden kann.

11. Verfahren nach Ansprüchen 1 bis 10, dadurch gekennzeichnet, daß das Carboxyalkylierungsmittel Monochloressigsäure und/oder Chlorpropionsäure und das Alkalisierungsmittel Natriumhydroxid sind.

12. Verfahren nach Ansprüchen 1 bis 11, dadurch gekennzeichnet, daß das Celluloseausgangsmaterial als Pulver bzw. Mahlgut mit Faserlängen nicht über 2 mm eingesetzt wird.

13. Verfahren nach Ansprüchen 1 bis 12, dadurch gekennzeichnet, daß als weitere Veretherungsmittel ein oder mehrere Alkylhalogenide, insbesondere Methylchlorid oder Ethylchlorid oder n-Isopropylchlorid oder Butylchlorid, Epoxyalkane, insbesondere Ethylenoxid und/oder Propylenoxid, und/oder Glycid eingesetzt werden, wobei mit diesen Veretherungsmitteln MS-Substitutionsgrade im Bereich von 0,001 bis 4, vorzugsweise im Bereich von 0,01 bis 2, insbesondere im Bereich 0,01 bis 1, eingestellt werden.

14. Verfahren nach Ansprüchen 1 bis 12, dadurch gekennzeichnet, daß mit einem Gewichtsverhältnis

0 117 419

Lösungsmittel/Cellulose von 3 : 1 bis 25 : 1, vorzugsweise von 8 : 1 bis 16 : 1, gearbeitet wird.

15. Verfahren nach Ansprüchen 1 bis 13, dadurch gekennzeichnet, daß Hydroxyethylcarboxymethyl-Cellulosen hergestellt werden mit einem Carboxymethylierungsgrad zwischen 1,0 und 2,6, vorzugsweise 1,0 und 1,75, und mit einem Hydroxyethylierungsgrad zwischen 0,001 und 4, vorzugsweise zwischen 0,01 und 2.

16. Verfahren nach Ansprüchen 1 bis 14, dadurch gekennzeichnet, daß der Wassergehalt des Systems gesenkt wird, indem intermediär aus dem Reaktionsgemisch unerwünscht hohe Wassermengen durch eine azeotrope Destillation mit den eingesetzten Suspensionsflüssigkeiten ausgekreist werden.

17. Verwendung der nach dem Verfahren der Ansprüche 1 bis 15 hergestellten hochsubstituierten Carboxyalkylcellulosen bzw. Carboxyalkylcellulosemischether als Hilfsstoffe bei der Erdölförderung, insbesondere bei der Erdölbohrung.

**Patentansprüche**

für die Vertragstaaten DE, FR, IT, SE.

1. Verfahren zur Herstellung von hochsubstituierten Carboxyalkylcellulosen eines durchschnittlichen Substitutionsgrades (DS) zwischen 1,0 und 2,8 und gegebenenfalls ihren Mischethern eines mittleren Gesamtsubstitutionsgrades (MS) größer 1 in wiederholten Umsetzungsstufen, jeweils bestehend aus Alkalisieren der Suspension feinteiliger Cellulose in einem organischen Lösungsmittel und nachfolgender Veretherung mit dem Carboxyalkylierungsmittel, gewünschtenfalls unter gleichzeitiger, vorheriger oder nachfolgender Umsetzung mit weiteren Veretherungsmitteln, bei dem mit nicht mehr als 3 Umsetzungsstufen gearbeitet wird, und weiterhin die jeweils nachfolgende Umsetzungsstufe im Reaktionsgemisch der abgeschlossenen Umsetzungsstufe ohne Zwischenreinigung durchgeführt wird und der Gesamtwassergehalt des Systems vor der letzten Veretherungsstufe nicht mehr als 450 Gew.-% - bezogen auf Celluloseeinsatzgewicht - beträgt, und weiterhin das Alkalisierungsmittel in jeder Stufe in einer Menge von nicht mehr als 5 mol/mol Anhydroglucoseeinheit eingesetzt wird, dadurch gekennzeichnet, daß in jeder Stufe das Carboxyalkylierungsmittel in einer Menge zwischen 0,6 und 2,5 mol/mol Anhydroglucoseeinheit eingesetzt wird.

2. Verfahren nach Anspruch 1, dadurch gekennzeichnet, daß die Alkalisierung einer nachfolgenden Umsetzungsstufe nach lediglich begrenzter Kühlung des Reaktionsgemisches aus dem davorliegenden Veretherungsschritt durchgeführt wird, wobei zur nachfolgenden Alkalisierung Temperaturen nicht unterhalb 30 - 40° C eingestellt werden.

3. Verfahren nach Ansprüchen 1 und 2, dadurch gekennzeichnet, daß die Menge des in jeder Umsetzungsstufe eingesetzten Carboxyalkylierungsmittels
im Bereich von 1,0 bis 2,2 mol/mol Anhydroglucoseeinheit liegt, während das Alkalisierungsmittel
in Mengen nicht über 4,5 mol, insbesondere in Mengen von 2 bis 4 mol/mol Anhydroglucoseeinheit eingesetzt wird.

4. Verfahren nach Ansprüchen 1 bis 3, dadurch gekennzeichnet, daß die Menge des Veretherungsmittels in einer nachfolgenden Umsetzungsstufe und vorzugsweise auch die entsprechende Menge des Alkalisierungsmittels höchstens der jeweils entsprechenden Menge aus der vorhergehenden Umsetzungsstufe gleich ist, vorzugsweise aber geringer als diese ist.

5. Verfahren nach Ansprüchen 1 bis 4, dadurch gekennzeichnet, daß der Gesamtwassergehalt des Reaktionssystems vor der letzten Veretherungsstufe nicht mehr als 400 Gew.-%, insbesondere nicht mehr als 350 Gew.-% ausmacht und vorzugsweise zwischen etwa 80 und 250 Gew.-% jeweils bezogen auf das Celluloseeinsatzgewicht liegt.

6. Verfahren nach Ansprüchen 2 bis 5, dadurch gekennzeichnet, daß als organische Lösungsmittel aliphatische Alkohole mit 2 bis 5 C-Atomen und insbesondere Isopropylalkohol und/oder n-Butanol eingesetzt werden.

7. Verfahren nach Ansprüchen 1 bis 6, dadurch gekennzeichnet, daß bei Temperaturen von 10 bis 110°C, vorzugsweise bei Temperaturen von 40 bis 85°C gearbeitet wird, wobei jedoch die Alkalisierung der ersten Verfahrensstufe bevorzugt auch unterhalb 40°C durchgeführt wird.

8. Verfahren nach Ansprüchen 1 bis 7, dadurch gekennzeichnet, daß DS-Carboxyalkalierungswerte von 1,4 und höher, vorzugsweise von 1,7 und höher, insbesondere des Bereichs von 1,5 bis 2,6 eingestellt werden.

9. Verfahren nach Ansprüchen 1 bis 8, dadurch gekennzeichnet, daß das organische Lösungsmittel und das Carboxyalkylierungsmittel wenigstens weitgehend wasserfrei und das Alkalisierungsmittel mit einem Wassergehalt nicht über 50 Gew.-% eingesetzt werden, wobei das Wasser ganz oder teilweise durch Methanol ersetzt werden kann.

10. Verfahren nach Anspruch 9, dadurch gekennzeichnet, daß das Alkalisierungsmittel gelöst in Wasser und/oder Alkohol, insbesondere Methanol eingesetzt werden kann.

11. Verfahren nach Ansprüchen 1 bis 10, dadurch gekennzeichnet, daß das Carboxyalkylierungsmittel Monochloressigsäure und/oder Chlorpropionsäure und das Alkalisierungsmittel Natriumhydroxid sind.

12. Verfahren nach Ansprüchen 1 bis 11, dadurch gekennzeichnet, daß das Celluloseausgangsmaterial als Pulver bzw. Mahlgut mit Faserlängen nicht über 2 mm eingesetzt wird.

8

13. Verfahren nach Ansprüchen 1 bis 12, dadurch gekennzeichnet, daß als weitere Veretherungsmittel ein oder mehrere Alkylhalogenide, insbesondere Methylchlorid oder Ethylchlorid oder n-Isopropylchlorid oder Butylchlorid, Epoxyalkane, insbesondere Ethylenoxid und/oder Propylenoxid, und/oder Glycid eingesetzt werden, wobei mit diesen Veretherungsmitteln MS-Substitutionsgrade im Bereich von 0,001 bis 4, vorzugsweise im Bereich von 0,01 bis 2, insbesondere im Bereich 0,01 bis 1, eingestellt werden.

14. Verfahren nach Ansprüchen 1 bis 12, dadurch gekennzeichnet, daß mit einem Gewichtsverhältnis Lösungsmittel/Cellulose von 3 : 1 bis 25 : 1, vorzugsweise von 8 : 1 bis 16 : 1, gearbeitet wird.

15. Verfahren nach Ansprüchen 1 bis 13, dadurch gekennzeichnet, daß Hydroxyethylcarboxymethyl-Cellulosen hergestellt werden mit einem Carboxymethylierungsgrad zwischen 1,0 und 2,6, vorzugsweise 1,0 und 1,75, und mit einem Hydroxyethylierungsgrad zwischen 0,001 und 4, vorzugsweise zwischen 0,01 und 2.

16. Verfahren nach Ansprüchen 1 bis 14, dadurch gekennzeichnet, daß der Wassergehalt des Systems gesenkt wird, indem intermediär aus dem Reaktionsgemisch unerwünscht hohe Wassermengen durch eine azeotrope Destillation mit den eingesetzten Suspensionsflüssigkeiten ausgekreist werden.

17. Verwendung der nach dem Verfahren der Ansprüche 1 bis 15 hergestellten hochsubstituierten Carboxyalkylcellulosen bzw. Carboxyalkylcellulosemischether als Hilfsstoffe bei der Erdölförderung, insbesondere bei der Erdölbohrung.

## Claims

for the contracting states: AT, BE, CH, GB, LI, NL

1. A process for the production of highly substituted carboxyalkyl celluloses having an average degree of substitution (DS) of from 1.0 to 2.8 and, optionally, mixed ethers thereof having a mean total degree of substitution (MS) of >1 in repeated reaction steps each comprising alkalizing a suspension of finely divided cellulose in an organic solvent and subsequent etherification with the carboxyalkylating agent, if desired accompanied, preceded or followed by reaction with further etherifying agents, characterized in that no more than 3 reaction steps are used, in each of which the carboxyalkylating agent is used in a quantity of no more than 2.5 moles/mole anhydroglucose unit and the alkalizing agent in a quantity of no more than 5 moles/mole anhydroglucose unit, in that the following reaction step is carried out in the reaction mixture of the completed reaction step without intermediate purification and in that the total water content of the system before the final etherification step is no more than 450% by weight, based on the starting weight of the cellulose.

2. A process as claimed in Claim 1, characterized in that the alkalization of a following reaction step is carried out after only limited cooling of the reaction mixture from the preceding etherification step, temperatures no lower than 30-40°C being adjusted for the following alkalization.

3. A process as claimed in Claims 1 and 2, characterized in that the quantity of the carboxyalkylating agent used in each reaction step is from 1.0 to 2.2 moles/mole anhydroglucose unit while the alkalizing agent is used in quantities of no more than 4.5 moles and more especially in quantities of from 2 to 4 moles/mole anhydroglucose unit.

4. A process as claimed in Claims 1 to 3, characterized in that the quantity of the etherifying agent in a following reaction step and, preferably, the corresponding quantity of the alkalizing agent is at most equal to, but preferably smaller than, the respective corresponding quantity from the preceding reaction step.

5. A process as claimed in Claims 1 to 4, characterized in that the total water content of the reaction system before the final etherification step is no more than 400 % by weight, preferably no more than 350 % by weight and more preferably from about 80 to 250 % by weight, based on the starting weight of the cellulose.

6. A process as claimed in Claims 2 to 5, characterized in that aliphatic alcohols containing from 2 to 5 carbon atoms, more especially isopropyl alcohol and/or n-butanol, are used as the organic solvent.

7. A process as claimed in Claims 1 to 6, characterized in that temperatures of from 10 to 110°C and preferably from 40 to 85°C are applied, although the alkalization of the first process step is preferably carried out below 40°C.

8. A process as claimed in Claims 1 to 7, characterized in that DS carboxyalkylation values of 1.4 and higher preferably of 1.7 and higher and more preferably of from 1.5 to 2.6 are adjusted.

9. A process as claimed in Claims 1 to 7, characterized in that the organic solvent and the carboxyalkylating agent are at least substantially anhydrous and the alkalizing agent has a water content of no more than 50 % by weight, the water being completely or partly replaceable by methanol.

10. A process as claimed in Claim 9, characterized in that the alkalizing agent may be used in solution in water and/or alcohol, particularly methanol.

11. A process as claimed in Claims 1 to 10, characterized in that the carboxyalkylating agent is monochloroacetic acid and/or chloropropionic acid and the alkalizing agent sodium hydroxide.

12. A process as claimed in Claims 1 to 11, characterized in that the starting cellulose is used in the form of a powder or ground material having fiber lengths of no more than 2 mm.

13. A process as claimed in Claims 1 to 12, characterized in that one or more alkyl halides, more especially methyl chloride or ethyl chloride or n-isopropyl chloride or butyl chloride epoxyalkanes, more especially ethylene oxide and/or propylene oxide, and/or glycidol are used as further etherifying agents, degrees of substitution MS of from 0.001 to 4, preferably from 0.01 to 2 and more preferably from 0.01 to 1 being adjusted with these etherifying agents.

14. A process as claimed in Claims 1 to 12, characterized in that the ratio by weight of solvent to cellulose is from 3:1 to 25:1 and preferably from 8:1 to 16:1.

15. A process as claimed in Claims 1 to 13, characterized in that hydroxyethyl carboxymethyl celluloses having a degree of carboxymethylation of from 1.0 to 2.6 and preferably from 1.0 to 1.75 and a degree of hydroxyethylation of from 0.001 to 4 and preferably from 0.01 to 2 are produced.

16. A process as claimed in Claims 1 to 14, characterized in that the water content of the system is reduced by intermediately removing undesirably large quantities of water from the reaction mixture by azeotropic distillation with the suspension liquids used.

17. The use of the highly substituted carboxyalkyl celluloses or carboxyalkyl cellulose mixed ethers produced by the process claimed in Claims 1 to 15 as auxiliaries in the recovery of crude oil and particularly in drilling for crude oil.

## Claims

for the contracting states DE, FR, IT, SE.

1. A proces for the production of highly substituted carboxyalkyl celluloses having an average degree of substitution (DS) of from 1.0 to 2.8 and, optionally, mixed ethers thereof having a mean total degree of substitution (MS) of greater than 1 in repeated reaction steps each comprising alkalizing a suspension of finely divided cellulose in an organic solvent and subsequent etherification with a carboxyalkylating agent, if desired accompanied, preceded or followed by reaction with further etherifying agents, in which no more than 3 reaction steps are used and the following reaction step is carried out in the reaction mixture of the completed reaction step without intermediate purification and the total water content of the system before the final etherification step is no more than 450% by weight, based on the starting weight of the cellulose, and the alkalizing agent is used in a quantity of no more than 5 moles/mole anhydroglucose unit in each step, characterized in that the carboxyalkylating agent is used in a quantity of from 0.6 to 2.5 moles/mole anhydroglucose unit in each step.

2. A process as claimed in Claim 1, characterized in that the alkalization of a following reaction step is carried out after only limited cooling of the reaction mixture from the preceding etherification step, temperatures no lower than 30 to 40°C being adjusted for the following alkalization.

3. A process as claimed in Claims 1 and 2, characterized in that the quantity of the carboxyalkylating agent used in each reaction step is from 1.0 to 2.2 moles/mole anhydroglucose unit while the alkalizing agent is used in quantities of no more than 4.5 moles and more especially in quantities of from 2 to 4 moles/mole anhydroglucose unit.

4. A process as claimed in Claims 1 to 3, characterized in that the quantity of the etherifying agent in a following reaction step and, preferably, the corresponding quantity of the alkalizing agent is at most equal to, but preferably smaller than, the respective corresponding quantity from the preceding reaction step.

5. A process as claimed in Claims 1 to 4, characterized in that the total water content of the reaction system before the final etherification step is no more than 400% by weight, preferably no more than 350% by weight and more preferably from about 80 to 250% by weight, based on the starting weight of the cellulose.

6. A process as claimed in Claims 2 to 5, characterized in that aliphatic alcohols containing from 2 to 5 carbon atoms, more especially isopropyl alcohol and/or n-butanol, are used as the organic solvent.

7. A process as claimed in Claims 1 to 6, characterized in that temperatures of from 10 to 110°C and preferably of from 40 to 85°C are applied, although the alkalization of the first process step is preferably carried out below 40°C.

8. A process as claimed in Claims 1 to 7, characterized in that DS carboxyalkylation values of 1.4 and higher, preferably of 1.7 and higher and more preferably of from 1.5 to 2.6 are adjusted.

9. A process as claimed in Claims 1 to 8, characterized in that the organic solvent and the carboxyalkylating agent are at least substantially anhydrous and the alkalizing agent has a water content of no more than 50% by weight, the water being completely or partly replaceable by methanol.

10. A process as claimed in Claim 9, characterized in that the alkalizing agent may be used in solution in water and/or alcohol, more especially methanol.

11. A process as claimed in Claims 1 to 10, characterized in that the carboxyalkylating agent is monochloroacetic acid and/or chloropropionic acid and the alkalizing agent sodium hydroxide.

12. A process as claimed in Claims 1 to 11, characterized in that the starting cellulose is used in the form of a powder or ground material having fiber lengths of no more than 2 mm.

13. A process as claimed in Claims 1 to 12, characterized in that one or more alkyl halides, more especially methyl chloride or ethyl chloride or n-isopropyl chloride or butyl chloride, epoxyalkanes, more especially ethylene oxide and/or propylene oxide, and/or glycidol are used as further etherifying agents, degrees of substitution MS of from 0.001 to 4, preferably from 0.01 to 2 and more preferably from 0.01 to 1 being adjusted with these etherifying agents.

**0 117 419**

14. A process as claimed in Claims 1 to 12, characterized in that the ratio by weight of solvent to cellulose is from 3:1 to 25:1 and preferably from 8:1 to 16:1.

15. A process as claimed in Claims 1 to 13, characterized in that hydroxyethyl carboxymethyl celluloses having a degree of carboxymethylation of from 1.0 to 2.6 and preferably from 1.0 to 1.75 and a degree of hydroxyethylation of from 0.001 to 4 and preferably of from 0.01 to 2 are produced.

16. A process as claimed in Claims 1 to 14, characterized in that the water content of the system is reduced by intermediately removing undesirably large quantities of water from the reaction mixture by azeotropic distillation with the suspension liquids used.

17. The use of the highly substituted carboxyalkyl celluloses or carboxyalkyl cellulose mixed ethers produced by the process claimed in Claims 1 to 15 as auxiliaries in the recovery of crude oil and particularly in drilling for crude oil.

**Revendications**

pour les états contractants AT, BE, CH, GB, LI, NL.

1. Procedé pour la fabrication de carboxyalcoylcelluloses hautement substituées ayant un taux de substitution moyen (DS) entre 1,0 et 2,8 et éventuellement de leurs éthers mixtes ayant un taux de substitution total en moyenne (MS) supérieur à 1, dans des étapes de substitution répétées, composées chaque fois d'une alcalinisation de la suspension de cellulose finement divisée, dans un solvant organique, suivie d'une éthérification avec l'agent de carboxyalcoylation, accompagnée, si on le désire, d'une réaction, simultanée, préalable, ou subséquente avec d'autres agents d'éthérification, procédé caractérisé en ce que l'on procède en trois étapes de réaction au maximum, dans chaque étape, l'agent de carboxyalcoylation étant mis en oeuvre dans une proportion ne dépassant pas 2,5 mol/mol de groupe anhydroglucose, tandis que l'agent d'alcalinisation est mis en oeuvre dans une proportion qui ne dépasse pas 5 mol/mol de groupe anhydroglucose, en ce que, en outre, une étape de réaction qui en suit une autre est effectuée dans le mélange réactionnel de l'étape de réaction achevée, sans épuration intermédiaire, et en ce que la teneur totale en eau du système, avant la dernière étape d'éthérification, ne se monte pas à plus de 450 % en poids calculé sur le poids de cellulose mis en oeuvre.

2. Procédé suivant la revendication 1, caractérisé en ce que l'alcalinisation d'une étape subséquente de réaction est effectuée avec seulement un refroidissement limité du mélange réactionnel de l'étape d'éthérification précédente, la température pour l'alcalinisation subséquente devant être réglée à une température qui ne soit pas inférieure à 30 à 40°C.

3. Procédé suivant les revendications 1 et 2, caractérisé en ce que la proportion de l'agent de carboxyalcoylation mis en oeuvre dans chaque étape de réaction,
se situe dans un ordre de grandeur de 1 à 2,2 mol/mol de groupe anhydroglucose pendant que l'agent d'alcalinisation est mis en oeuvre,
dans des proportions qui ne dépessent pas 4,5 moles et, en particulier, qui sont de 2 à 4 mol/mol de groupes anhydroglucose.

4. Procédé suivant les revendications 1 à 3, caractérisé en ce que la proportion d'agent d'éthérification dans une étape de réaction qui en suit une autre, et aussi, de préférence, la proportion appropriée d'agent d'alcalinisation est, au maximum, égale à la quantité correspondante utilisée dans l'étape de réaction précédente, ou mieux, est plus petite que cette dernière.

5. Procédé suivant les revendications 1 à 4, caractérisé en ce que la teneur totale en eau, dans le système réactionnel avant la dernière étape d'éthérification, n'est pas superieure à 400 % en poids, en particulier pas supérieure à 350 % en poids, et est située avantageusement entre environ 80 et 250 % et poids, toujours calculé sur le poids de cellulose mis en oeuvre.

6. Procédé suivant les revendications 2 à 5, caractérisé en ce que, comme solvant organique, il est utilisé des alcools aliphatiques à 2 à 5 atomes de C, et en particulier des alcools isopropylique et/ou n-butanolique.

7. Procédé suivant les revendications 1 à 6, caractérisé en ce que l'on opère à des températures de 10 à 110°C ou mieux de 40 à 85°C, pendant que, toutefois, l'alcalinisation de la première étape d'opération est effectuée, de préférence, aussi à une température inférieure à 40°C.

8. Procédé suivant les revendications 1 à 7, caractérisé en ce que les chiffres de la carboxyalcoylation DS sont ajustés à 1,4 et plus, de préférence de 1,7 et plus, en particulier de l'ordre de 1,5 à 2,6.

9. Procédé suivant les revendications 1 à 8, caractérisé en ce que l'on met en oeuvre le solvant organique et l'agent de carboxyalcoylation, au moins dans une large mesure, exempts d'eau, et l'agent d'alcalinisation, avec une teneur en eau qui ne dépasse pas 50 % en poids, l'eau pouvant être remplacée totalement en partiellement par du méthanol.

10. Procédé suivant la revendication 9, caractérisé en ce que l'agent d'alcalinisation est mis en oeuvre à l'état dissous dans l'eau et/ou un alcool, en particulier du méthanol.

11. Procédé suivant les revendications 1 à 10, caractérisé en ce que l'agent de carboxyalcoylation est l'acide monochloracétique et/ou l'acide chlorpropionique, et que l'agent d'alcalinisation est l'hydroxyde de sodium.

12. Procédé suivant les revendications 1 à 11, caractérisé en ce que la matière cellulosique de départ est mise

11

en oeuvre sous la forme de poudre ou de matière moulue où les longueurs de fibres ne dépassent pas 2 mm.

13. Procédé suivant les revendications 1 à 12, caractérisé en ce que, comme autres agents d'éthérification, il est utilisé un ou plusieurs alcoylhalogénures, en particulier le chlorure de méthylène ou la chlorure d'éthyle, ou le chlorure de n-isopropyle, ou le chlorure de butyle, les époxyalcanes, en particulier l'oxyde d'éthylène et/ou de propylène, et/ou des glycides, pendant qu'avec ces agents d'éthérification, on ajuste des taux de substitution MS de l'ordre de 0,001 à 4, de préférence de 0,01 à 2, en particulier de l'ordre de 0,01 à 1.

14. Procédé suivant les revendications 1 à 12, caractérisé en ce que l'on opère avec un rapport en poids solvant/cellulose de 3 : 1 à 25 : 1, ou mieux de 8 : 1 à 16 : 1.

15. Procédé suivant l'une des revendications 1 à 13, caractérisé en ce que l'on fabrique des hydroxyéthylcarboxyméthyl-celluloses avec un taux de carboxyméthylation se situant entre 1 et 2,6, de préférence entre 1 et 1,75, et un taux d'hydroxyéthylation qui se situe entre 0,001 et 4, ou mieux entre 0,01 et 2.

16. Procédé suivant les revendications 1 à 14, caractérisé en ce que la teneur en eau du système est abaissée, du fait qu'il est retiré du circuit, dans une opération intermédiaire, à partir du mélange réactionnel, les quantités importantes d'eau indésirables par une distillation azéotrope avec les liquides mis en oeuvre pour la suspension.

17. Utilisation des carboxyalcoylcelluloses, ou des éthers mixtes de carboxyalcoylcellulose, hautement substitués, fabriqués suivant le procédé des revendications 1 à 15 comme agents auxiliaires pour l'extraction des huiles en particulier dans les foraces pétrolifères.

## Revendications

pour les états contractants DE, FR, IT, SE.

1. Procédé pour la fabrication de carboxyalcoyl-celluloses hautement substituées ayant un taux de substitution moyen (DS) entre 1 et 2,8 et éventuellement de leurs éthers mixtes, dont le taux de substitution totale est en moyenne (MS) supérieur à 1, dans des étapes de réaction répétées, constituées chaque fois d'une alcalinisation de la suspension de cellulose finement divisée dans un solvant organique et éthérification subséquente avec l'agent de carboxyalcoylation, si on le désire avec réaction simultanée, préalable, ou subséquente, avec un autre agent d'éthérification, où l'on opère en trois étapes de réaction au maximum, et où, d'autre part, l'étape de réaction qui en suit une autre, est exécutée dans le mélange réactionnel de l'étape de réaction terminée sans épuration intermédiaire et où la teneur totale en eau du système ne dépasse pas, avant la dernière étape d'éthérification, 450 % en poids, calculé sur ce poids de cellulose mis en oeuvre, et en outre, l'agent d'alcalinisation est mis en oeuvre dans chaque étape dans une proportion qui ne dépasse pas 5 mol/mol de groupes anhydroglucose, procédé caractérise en ce que dans chaque étape, l'agent de carboxyalcoylation est utilisé dans une proportion qui se situe entre 0,6 et 2,5 mol/mol de groupes anhydroglucose.

2. Procédé suivant la revendication 1, caractérisé en ce que l'alcalinisation d'une étape subséquente de réaction est effectuée avec seulement un refroidissement limité du mélange réactionnel de l'étape d'éthérification précédente, la température pour l'alcalinisation subséquente devant être réglée à une température qui ne soit pas inférieure à 30 à 40°C.

3. Procédé suivant les revendications 1 et 2, caractérisé en ce que la proportion de l'agent de carboxyalcoylation mis en oeuvre dans chaque étape de réaction,

se situe dans un ordre de grandeur de 1 à 2,2 mol/mol de groupe anhydroglucose pendant que l'agent d'alcalinisation est mis en oeuvre,

dans des proportions qui ne dépassent pas 4,5 moles et, en particulier, qui sont de 2 à 4 mol/mol de groupes anhydroglucose.

4. Procédé suivant les revendications 1 à 3, caractérisé en ce que la proportion d'agent d'éthérification dans une étape de réaction qui en suit une autre, et aussi, de préférence, la proportion appropriée d'agent d'alcalinisation est, au maximum, égale à la quantité correspondante utilisée dans l'étape de réaction précédente, ou mieux, est plus petite que cette dernière.

5. Procédé suivant les revendications 1 à 4, caractérisé en ce que la teneur totale en eau, dans le système réactionnel avant la dernière étape d'éthérification, n'est pas supérieure à 400 % en poids, en particulier pas supérieure à 350 % en poids, et est située avantageusement entre environ 80 et 250 % en poids, toujours calculé sur le poids de cellulose mis en oeuvre.

6. Procédé suivant les revendications 2 à 5, caractérisé en ce que, comme solvant organique, est utilisé des alcools aliphatiques à 2 à 5 atomes de C, et en particulier des alkools isopropylique et/ou n-butanolique.

7. Procédé suivant les revendications 1 à 6, caractérisé en ce que l'on opère à des températures de 10 à 110°C ou mieux de 40 à 85°C, pencant que, toutefois, l'alcalinisation de la première étape d'opération est effectuée, de préférence, aussi à une température inférieure à 40°C.

8. Procédé suivant les revendications 1 à 7, caractérisé en ce que les chiffres de la carboxyalcoylation DS sont ajustés à 1,4 et plus, de préférence de 1,7 et plus, en particulier de l'ordre de 1,5 à 2,6.

9. Procédé suivant les revendications 1 à 8, caractérisé en ce que l'on met en oeuvre le solvant organique et l'agent de carboxyalcoylation, au moins dans une large mesure, exempts d'eau, et l'agent d'alcalinisation, avec une teneur en eau qui ne dépasse pas 50 % en poids, l'eau pouvant être remplacée totalement en partiellement par du méthanol.

10. Procédé suivant la revendication 9, caractérisé en ce que l'agent d'alcalinisation est mis en oeuvre à l'état dissous dans l'eau et/ou un alcool, en particulier du méthanol.

11. Procédé suivant les revendications 1 à 10, caractérisé en ce que l'agent de carboxyalcoylation est l'acide monochloracétique et/ou l'acide chlorpropionique, et que l'agent d'alcalinisation est l'hydroxyde de sodium.

12. Procédé suivant les revendications 1 à 11, caractérisé en ce que la matière cellulosique de départ est mise en oeuvre sous la forme de poudre ou de matière moulue où les longueurs de fibres ne dépassent pas 2 mm.

13. Procédé suivant les revendications 1 à 12, caractérisé en ce que, comme autres agents d'éthérification, il est utilisé un ou plusieurs alcoylhalogénures, en particulier le chlorure de méthylène ou le chlourure d'éthyle, ou le chloure de n-isopropyle, ou le chlorure de butyle, les époxyalcanes, en particulier l'oxyde d'éthylène et/ou de propylène, et/ou des glycides, pendant qu'avec ces agents d'étérfication, on ajuste des taux de substitution MS de l'ordre de 0,001 à 4, de préférence de 0,01 à 2, en particulier de l'ordre de 0,01 à 1.

14. Procédé suivant les revendications 1 à 12, caractérisé en ce que l'on opère avec un rapport en poids solvant/cellulose de 3 : 1 à 25 : 1, ou mieux de 8 : 1 à 16 : 1.

15. Procédé suivant l'une des revendications 1 à 13, caractérisé en ce que l'on fabrique des hydroxyéthylcarboxyméthyl-celluloses avec un taux de carboxyméthylation se situant entre 1 et 2,6, de préférence entre 1 et 1,75, et un taux d'hydroxyéthylation qui se situe entre 0,001 et 4, ou mieux entre 0,01 et 2.

16. Procédé suivant les revendications 1 à 14, caractérisé en ce que la teneur en eau du système est abaissée, du fait qu'il est retiré du circuit, dans une opération intermédiaire, à partir du mélange réactionnel, les quantités importantes d'eau indésirables par une distillation azéotrope avec les liquides mis en oeuvre pour la suspension.

17. Utilisation des carboxyalcoylcelluloses, ou des éthers mixtes de carboxyalcoylcellulose, hautement substitués, fabriqués suivant le procédé des revendications 1 à 15 comme agents auxiliaires pour l'extraction des huiles en particulier dans les forages pétrolifères.